# EUROPÄISCHE PATENTSCHRIFT

(11) **EP 1 078 711 B1**
(45) Veröffentlichungstag und Bekanntmachung des Hinweises auf die Patenterteilung: **29.06.2005**
(21) Anmeldenummer: 00117138.8
(22) Anmeldetag: 10.08.2000
(51) Int. Cl.: B23K 35/30, C22C 5/08

(54) **Cadmiumfreie Hartlotlegierungen**
Cadmium-free brazing alloys
Alliage de brasage exempt de cadmium

(30) Priorität: 24.08.1999 DE 19940115
(43) Veröffentlichungstag der Anmeldung: 28.02.2001
(73) Patentinhaber: BrazeTec GmbH, 63457 Hanau (DE)
(72) Erfinder: Kempf, Bernd, Dr., 63839 Kleinwallstadt (DE); Wittpahl, Sandra, 63456 Hanau (DE); Kaufmann, Dieter, 63699 Kefenrod-Hitzkirchen (DE)
(74) Vertreter: VOSSIUS & PARTNER

(56) Entgegenhaltungen:
- EP-A- 0 585 708
- GB-A- 1 532 840
- US-A- 2 138 637
- US-A- 5 400 946
- CHEMICAL ABSTRACTS, vol. 84, no. 16, 19. April 1976 (1976-04-19) Columbus, Ohio, US; abstract no. 110171, YAMAYA, SUSUMU ET AL: "Silver solder" XP002153245 & JP 50 136254 A (TOSHIBA TUNGALOY CO., LTD., JAPAN) 29. Oktober 1975 (1975-10-29)
- CHEMICAL ABSTRACTS, vol. 128, no. 17, 27. April 1998 (1998-04-27) Columbus, Ohio, US; abstract no. 207850, TAKARAZAWA, KATSUYUKI ET AL: "Brazes for low-temperature soldering platinum ornaments" XP002153243 & JP 10 029087 A (TANAKA NOBLE METAL INDUSTRIAL CO., LTD., JAPAN) 3. Februar 1998 (1998-02-03)
- CHEMICAL ABSTRACTS, vol. 82, no. 16, 21. April 1975 (1975-04-21) Columbus, Ohio, US; abstract no. 102169, OHHARA, MITSUHIRO ET AL: "Silver solder" XP002153244 & JP 49 110558 A (ISHIFUKU METAL INDUSTRY CO., LTD., JAPAN) 21. Oktober 1974 (1974-10-21)
- PATENT ABSTRACTS OF JAPAN vol. 015, no. 443 (M-1178), 12. November 1991 (1991-11-12) & JP 03 189074 A (SEIKOSHA CO LTD), 19. August 1991 (1991-08-19)

## Beschreibung

Die Erfindung betrifft cadmiumfreie, niedrig schmelzende Hartlotlegierungen mit guter Benetzungsfähigkeit auf Hartmetallen.

Löten ist ein besonders werkstoffschonendes, wirtschaftliches Fügeverfahren und hat sowohl in der Serienfertigung als auch beim Fügen von Einzelteilen eine hohe technische Bedeutung. Ein großer Vorteil des Lötens liegt darin, daß bei relativ niedrigen Temperaturen Werkstoffe stoffschlüssig miteinander verbunden werden können. Je niedriger die Löttemperatur ist, desto geringer sind der Energieverbrauch, die Gefügebeeinflussung der Grundwerkstoffe und im allgemeinen auch die Lötfehler. Niedrigschmelzende Hartlote sind deshalb besonders gefragt.

Übliche Silber-Basislote enthalten neben Ag als Hauptlegierungselemente Cu, Zn, Sn, In und gegebenenfalls weitere Elemente. Niedrigschmelzend, leicht zu löten und vielseitig anwendbar sind kadmiumhaltige Silberlote. Cadmium und insbesondere seine Dämpfe sind jedoch krebserregend. Daher dürfen derartige Lote nur unter Einhaltung strenger Sicherheitsmaßnahmen eingesetzt werden. Der Vorteil der cadmiumhaltigen Lote ist ihr besonders niedriger Schmelzbereich und die damit möglichen besonders niedrigen Löttemperaturen. Diese wurden von den üblichen cadmiumfreien Ag-Basis-Loten bis in jüngere Zeit nicht erreicht.

Seit einigen Jahren sind jedoch auch Ag-Hartlote bekannt, die auch ohne Cadmiumzusatz Löttemperaturen von unter 630°C erreichen. Im wesentlichen wird dies dadurch erreicht, daß diese Lotlegierungen in differenziert abgestimmtem Verhältnis zu den weiteren Legierungselementen das Element Ga enthalten.

Derartige Legierungen sind z.B. in den Patentschriften DE 43 15 190, DE 43 15 189, DE 4229189 und DE 43 23 227 beschrieben. Diese Legierungen sind speziell als Ersatz für die niedrig schmelzenden cadmiumhaltigen Lote konzipiert.

Insbesondere beim Löten von Hartmetallen sind niedrige Löttemperaturen wünschenswert, um die thermisch induzierten Abkühlspannungen aufgrund unterschiedlicher thermischer Ausdehnungskoeffizienten von Hartmetall und Trägermaterial möglichst klein zu halten. Neben der Differenz der Ausdehnungskoeffizienten ist nämlich die Temperaturdifferenz zwischen Erstarrungstemperatur des Lotes und Raumtemperatur für die Größe der induzierten Spannungen ausschlaggebend. In der Werkzeugindustrie und speziell für den Einsatz in Bohrköpfen werden diamantbeschichtete Hartmetalle eingesetzt, die über eine besonders hohe Abrasionsbeständigkeit verfügen. Ist es aus technischen Gründen notwendig, daß diese diamantbeschichteten Hartmetalle an Luft unter Einsatz von Flussmitteln auf die Trägermaterialien gelötet werden, so darf die Löttemperatur keinesfalls ca. 690° überschreiten, um die Diamantschicht nicht zu beschädigen. Je niedriger die Löttemperatur, umso höher ist in diesem Fall die Prozeßsicherheit und die Sicherheit der Produktqualität.

Es hat sich jedoch gezeigt, daß die aus den genannten Schriften bekannten galliumhaltigen Lote Hartmetalle, und zwar speziell die als Bohrköpfe eingesetzten Hartmetalle, nicht gut benetzen, so daß der Lötprozeß dadurch erschwert wird.

Es war daher Aufgabe der Erfindung, Hartlote mit Löttemperaturen von unter 650°C zu entwickeln, die frei von toxischen Bestandteilen wie insbesondere Cadmium sind, und die darüber hinaus eine sehr gute Benetzbarkeit von Hartmetallen zeigen. Außerdem sollten diese Lote besonders zum Löten von diamantbeschichteten Hartmetallen geeignet sein.

Diese Aufgabe wird erfindungsgemäß gelöst durch eine cadmium-freie Hartlotlegierung bestehend aus:
50 - 7 0 Gew.% Ag
10 - 20 Gew.% Cu
1 - 20 Gew.% Ga
5 - 20 Gew.% Zn
0 - 6 Gew.% Sn und/oder In
0,1 - 8 Gew.% Mn oder
0,1 - 2 Gew.% Si und/oder Ge, und ggf. bis zu 5 Gew.-% Co oder Ni.

Besonders bevozugt sind Legierungen der Zusammensetzung
50 - 60 Gew.% Ag
10 - 20 Gew.% Cu
1 - 10 Gew.% Ga
10 - 20 Gew.% Zn
1 - 6 Gew.% Sn und/oder In und
0,1 - 8 Gew.% Mn
   und
60 - 70 Gew.% Ag
10 - 20 Gew.% Cu
10 - 20 Gew.% Ga
5 - 10 Gew.% Zn
0,1 - 8 Gew.% Mn oder
0,1 - 3 Gew.% Si und/oder Ge.

Die erfindungsgemäßen cadmiumfreien Hartlotlegierungen können besonders vorteilhaft für das Hartlöten von Hartmetallen eingesetzt werden.

So weisen die erfindungsgemäßen Hartlote deutlich niedrigere Arbeitstemperaturen auf als konventionelle Hartlote.

Insbesondere liegen die Arbeitstemperaturen bei oder überwiegend sogar unter den Arbeitstemperaturen der niedrigschmelzenden cadmiumhaltigen - und damit problematischen - und denen der cadmiumfreien, galliumhaltigen Hartlote.

In der weiter unten folgenden Tabelle 1 sind die Zusammensetzungen einiger erfindungsgemäßer Legierungen (Nr. 1-7) im Vergleich zu bekannten cadmiumfreien, galliumhaltigen Hartloten (Nr. 8 und 9) aufgeführt (Zusammensetzungen in Gew.%) und deren Arbeitstemperaturen angegeben.

Aufgrund des vergleichsweise geringen Anteils an Mn als Legierungsbestandteil sind die erfindungsgemäßen Lote sehr gut gießbar und umformbar und damit im Herstellungsprozess problemlos ver- und bearbeitbar.

Eine besonders überraschende und unerwartete Eigenschaft der erfindungsgemäßen Hartlote ist deren vorzügliches Benetzungsverhalten auf Hartmetallen.

Zur Beurteilung der Benetzungsfähigkeit der Lote auf Hartmetall werden von verschiedenen Lotlegierungen ausgestanzte runde Lotplättchen definierter Dicke (0,2 mm) und Größe (5 mm ø) auf Hartmetallproben gelegt, Flußmittel appliziert und diese Proben an Luft unter anwendungstypischer Aufheizrate im Ofen auf Löttemperatur gebracht. Nach dem Abkühlen wird die mit Lot benetzte Fläche des Hartmetalls bestimmt und mit der Ausgangsfläche der Lötplättchen ins Verhältnis gesetzt. Das Ergebnis ist in Tabelle 1 unter der Spalte "Benetzungsindex" aufgeführt. Es zeigt sich dabei überraschenderweise, daß die erfindungsgemäßen Lote eine erheblich bessere Benetzungsfähigkeit auf Hartmetall aufweisen als die bekannten cadmiumfreien, galliumhaltigen Hartlote.

Ein weiterer praxisrelevanter Vorzug der erfindungsgemäßen Hartlote ist die Steigerung der Scherfestigkeit der damit hergestellten Lotverbunde.

Aufgrund des vorstehend dargelegten Eigenschaftsprofils sind die erfindungsgemäßen cadmiumfreien Hartlotlegierungen im besonderen Maße für das Löten von Hartmetallen geeignet wie insbesondere beim Löten von diamantbesetzten bzw. -beschichteten Hartmetallsegmenten, etwa bei der Herstellung von Bohrköpfen.

**Tabelle 1**

| Nr. | Ag | Cu | Ga | Zn | Sn/In | Mn/Si/Ge | Arbeitstemperatur °C | Benetzungsindex (1) |
|---|---|---|---|---|---|---|---|---|
| 1 | 56 | 18,5 | 3 | 17 | 5(Sn) | 0,5 (Mn) | 620 | 3 |
| 2 | 56 | 16 | 3 | 17 | 3 Sn | 3(Mn) | 610 | 5 |
| | | | | | 2 In | | | |
| 3 | 56 | 14 | 3 | 17 | 5(Sn) | 5(Mn) | 635 | 7 |
| 4 | 62 | 15 | 15 | 7 | - | 1(Si) | 600 | 4 |
| 5 | 62 | 13 | 15 | 7 | - | 1 Si | 580 | 5 |
| | | | | | | 2 Ge | | |
| 6 | 62 | 11 | 15 | 7 | - | 5(Mn) | 615 | 6 |
| 7 | 54 | 20 | 3 | 17 | 5(Sn) | 1(Ge) | 610 | 3,5 |
| 8 | 55 | 20 | 3 | 17 | 5(Sn) | - | 630 | 1,5 |
| 9 | 63 | 15 | 15 | 7 | - | - | 600 | 2 |

| | | | | | | | | |
|---|---|---|---|---|---|---|---|---|
| (1) Benetzungsindex: = Verhältnis Ausgangsfläche / belotete Fläche. | | | | | | | | |

## Patentansprüche

1. Hartlotlegierung, bestehend aus:
50 bis 70 Gew.% Ag
10 bis 20 Gew.% Cu
1 bis 20 Gew.% Ga
5 bis 20 Gew.% Zn
0 bis 6 Gew.% Sn und/oder In
0,1 bis 8 Gew.% Mn oder
0,1 bis 3 Gew.% Si und/oder Ge, und gegebenenfalls bis zu 5 Gew.-% Co oder Ni.

2. Hartlotlegierung nach Anspruch 1, **gekennzeichnet durch** die Zusammensetzung:
50 bis 60 Gew.% Ag
10 bis 20 Gew.% Cu
1 bis 20 Gew.% Ga
10 bis 20 Gew.%Zn
1 bis 6 Gew.% Sn und/oder In und
0,1 bis 8 Gew.% Mn.

3. Hartlotlegierung nach Anspruch 1, **gekennzeichnet durch** die Zusammensetzung:
60 bis 70 Gew.% Ag
10 bis 20 Gew.% Cu
10 bis 20 Gew.% Ga
5 bis 10 Gew.% Zn
0,1 bis 8 Gew.% Mn oder
0,1 bis 3 Gew.% Si und/oder Ge.

4. Verwendung der Hartlotlegierung gemäß einem der Ansprüche 1 bis 3 zum Löten von Hartmetallen.

5. Verwendung nach Anspruch 4 zum Löten von diamantbesetzten bzw. -beschichteten Hartmetallsegmenten bei der Herstellung von Bohrköpfen.

## Claims

1. A brazing alloy, consisting of:
50 to 70 wt.% Ag,
10 to 20 wt.% Cu,
1 to 20 wt.% Ga,
5 to 20 wt.% Zn,
0 to 6 wt.% Sn and/or In,
0.1 to 8 wt.% Mn or
0.1 to 3 wt.% Si and/or Ge, and
optionally up to 5 wt.% Co or Ni.

2. The brazing alloy according to claim 1, **characterized by** the composition:
50 to 60 wt.% Ag,
10 to 20 wt.% Cu,
1 to 20 wt.% Ga,
10 to 20 wt.% Zn,
1 to 6 wt.% Sn and/or In, and
0.1 to 8 wt.% Mn.

3. The brazing alloy according to claim 1, **characterized by** the composition:
60 to 70 wt.% Ag,
10 to 20 wt.% Cu,
10 to 20 wt.% Ga,
5 to 10 wt.% Zn,
0.1 to 8 wt.% Mn or
0.1 to 3 wt.% Si and/or Ge.

4. Use of the brazing alloy according to any one of claims 1 to 3 for brazing of hard metals.

5. Use according to claim 4 for brazing of hard metal segments studded or coated with diamonds in the preparation of drill heads.

## Revendications

1. Alliage de brasage fort constitué de :
50 à 70 % en poids d'Ag,
10 à 20 % en poids de Cu,
1 à 20 % en poids de Ga,
5 à 20 % en poids de Zn,
0 à 6 % en poids de Sn et/ou d'In
0,1 à 8 % en poids de Mn, ou de
0,1 à 3 % en poids de Si et/ou de Ge, et de, le cas échéant, jusqu'à 5 % en poids de Co ou de Ni.

2. Alliage de brasage fort selon la revendication 1,
**caractérisé par** la composition :
50 à 60 % en poids d'Ag,
10 à 20 % en poids de Cu,
1 à 20 % en poids de Ga,
10 à 20 % en poids de Zn,
1 à 6 % en poids de Sn et/ou d'In, et
0,1 à 8 % en poids de Mn.

3. Alliage de brasage fort selon la revendication 1,
**caractérisé par** la composition :
60 à 70 % en poids d'Ag,
10 à 20 % en poids de Cu,
10 à 20 % en poids de Ga,
5 à 10 % en poids de Zn,
0,1 à 8 % en poids de Mn, ou
0,1 à 3 % en poids de Si et/ou de Ge.

4. Utilisation de l'alliage de brasage fort selon l'une quelconque des revendications 1 à 3 pour le brasage de métaux durs.

5. Utilisation selon la revendication 4 pour le brasage de segments de métal dur diamantés ou recouverts de diamants lors de la fabrication de têtes d'alésage.
